# EUROPÄISCHE PATENTSCHRIFT

(11) **EP 1 293 018 B1**
(45) Veröffentlichungstag und Bekanntmachung des Hinweises auf die Patenterteilung: **13.10.2004**
(21) Anmeldenummer: 01940564.6
(22) Anmeldetag: 12.06.2001
(51) Int. Cl.: H01S 3/067, H01S 3/08

(54) **FASER-LASER**
FIBER LASER
LASER A FIBRE OPTIQUE

(30) Priorität: 20.06.2000 DE 10030259
(43) Veröffentlichungstag der Anmeldung: 19.03.2003
(73) Patentinhaber: Evotec OAI AG, 22525 Hamburg (DE)
(72) Erfinder: BAEV, Valeri, 22559 Hamburg (DE); STARK, Arnold, 20259 Hamburg (DE); SALEWSKI, Stefan, 21680 Stade (DE); THURAU, Wolfgang, 22307 Hamburg (DE); TOSCHEK, Peter, 20149 Hamburg (DE)
(74) Vertreter: von Kirschbaum, Alexander, Dipl.-Ing.
(86) Internationale Anmeldenummer: PCT/EP2001/006610
(87) Internationale Veröffentlichungsnummer: WO 2001/099243

(56) Entgegenhaltungen:
- EP-A- 0 984 532
- DE-A- 19 636 236
- DE-A- 19 718 997
- US-A- 5 862 162
- OBER M H ET AL: "CONTROLLABLE DUAL-WAVELENGTH OPERATION OF A FEMTOSECOND NEODYMIUM FIBER LASER" OPTICS LETTERS, OPTICAL SOCIETY OF AMERICA, WASHINGTON, US, Bd. 20, Nr. 2, 15. Januar 1995 (1995-01-15), Seiten 195-197, XP000486646 ISSN: 0146-9592
- PATENT ABSTRACTS OF JAPAN vol. 009, no. 019 (E-292), 25. Januar 1985 (1985-01-25) -& JP 59 165488 A (NIPPON DENKI KK), 18. September 1984 (1984-09-18)
- PATENT ABSTRACTS OF JAPAN vol. 017, no. 418 (E-1408), 4. August 1993 (1993-08-04) -& JP 05 082881 A (ANDO ELECTRIC CO LTD), 2. April 1993 (1993-04-02)

## Beschreibung

Die Erfindung betrifft einen Faser-Laser mit einer Faser zur Laserlichterzeugung.

Bei einem Faser-Laser ist das laseraktive Medium in einen Lichtwellenleiter eingebunden. Laseraktivität der Faser wird insbesondere erzielt, indem der Faserkern mit Ionen Seltener Erden dotiert wird. Für zahlreiche Laserübergänge von Selten-Erden-Ionen konnte Laseremission erstmals in Faser-Lasern, insbesondere seit als Wirtsmaterial neben Silikatgläsern auch Fluoridgläser vor allem Fluorzirkonatglas ZBLAN genutzt werden, beobachtet werden. Fluoridgläser haben im Vergleich zu Silikatgläsern kleinere effektive Photonenenergien; geringere nichtstrahlende Zerfallsraten, größere Lebensdauern angeregter Zustände und größere Verstärkungsquerschnitte sind die Folge. Mit Fluoridgläsern sind hohe Quantenwirkungsgrade und effiziente Anregung in hochliegende Energieniveaus durch Absorption aus angeregten Zuständen zu erzielen, so dass Laseremission aus Zuständen möglich wird, deren Anregungsenergie größer ist als die Quantenenergie des anregenden Lichts (Aufkonversions-Laser).

Aktive Fasern können generell durch Dotierung des Faserkerns mit laseraktiven Materialien hergestellt werden. Die Anregung der Ionen erfolgt hierbei über eine Pumplichtquelle zur Erzeugung von in die Faser einzukoppelndem Pumplicht. Das Pumplicht wird longitudinal in die Faser eingestrahlt, so dass es von den Ionen absorbiert wird. Dabei wird das Pumplicht auf die Stirnseite der Faser mit Hilfe einer Linse fokussiert, in den Faserkern eingekoppelt und dort geführt.

Falls nur ein Teil des in die Faser eingekoppelten Lichts von den entsprechenden Ionen absorbiert wird, ist zur Erzeugung einer ausreichenden Laserintensität eine Pumplichtquelle mit hoher Leistung erforderlich. Zur Erhöhung des Wirkungsgrades des Lasers, d.h. insbesondere der Menge absorbierten Lichts der Pumplichtquelle, ist es bekannt, an der Austrittsseite der Faser das austretende Licht, das noch nicht von den in der Faser enthaltenen Ionen absorbiert wurde, mit Hilfe eines Spiegels in die Faser zurück zu koppeln. Ferner ist es bekannt, diesen Resonatorspiegel unmittelbar auf das Faserende aufzudampfen.

Ein derartiger Faser-Laser ist beispielsweise aus DE 196 36 236 A1 bekannt. Der hierin beschriebene diodenlasergepumpte Viel-Moden-Wellenleiterlaser weist einen Diodenlaser auf. Mit Hilfe einer Kollimationsoptik wird das von dem Dioden-Laser abgegebene Licht an der Eintrittsseite der Faser in diese eingekoppelt. Ein Spiegel ist auf die Eintrittsseite der Faser aufgedampft. Für die durch den Diodenlaser erzeugte Pumpwellenlänge ist der Spiegel nur sehr gering reflektierend. Durch den Spiegel an der Eintrittsseite wird jedoch das erzeugte Laser-Licht äußerst gut reflektiert. An der Eintrittsseite der Faser kann daher annähernd nur Licht mit der Pumpwellenlänge aus der Faser austreten. Das gegenüberliegende Faserende, die Austrittsseite der Faser, kann für die zu erzeugende Laser-Wellenlänge entspiegelt sein.

Um in der Faser erzeugtes Laser-Licht wieder in die Faser zurück zu koppeln, ist in einem Abstand zu der Austrittsseite der Faser ein Spiegel angeordnet. Das von diesem Resonatorspiegel reflektierte Licht wird mit Hilfe einer zwischen der Austrittsseite der Faser und dem Resonatorspiegel angeordneten Linse fokussiert und in die Faser wieder eingekoppelt.

Die Veröffentlichung Ober M H et al: 'CONTROLLABLE DUAL-WAVELENGTH OPERATION OF A FEMTOSECOND NEODYMIUM FIBER LASER' OPTICS LETTERS, OPTICAL SOCIETY OF AMERICA, WASHINGTON, US, Bd. 20, Nr. 2.15. Januar 1995 (1995-01-15), Seiten 195-197 offenbart einen Faser-Laser gemäß dem Oberbegriff von Anspruch 1.

Aufgabe der Erfindung ist es, einen Faser-Laser zu schaffen, mit dem eine Emission bei mehreren Wellenlängen möglich ist. Vorzugsweise soll der Faser-Laser mehrere Wellenlängen entweder gleichzeitig oder selektiv und umschaltbar emittieren. Ferner soll vorzugsweise bei dem Faser-Laser eine Pumplichtquelle mit geringer Leistung verwendet werden können.

Die Lösung der Aufgabe erfolgt erfindungsgemäß durch die Merkmale des Patentanspruchs 1.

Der erfindungsgemäße Faser-Laser weist eine Faser zur Laserlichterzeugung mit einer Eintrittsseite und einer Austrittsseite auf. Insbesondere handelt es sich hierbei um eine aktive Faser, die mit Seltene-Erden-Ionen dotiert ist. Zur Einkopplung von Pumplicht in die Faser über die Eintrittsseite ist eine Pumplichtquelle vorgesehen. Bei der Pumplichtquelle handelt es sich beispielsweise um eine Laserdiode. Die Laserdiode erzeugt vorzugsweise Licht einer Anregungswellenlänge bzw. eines Anregungs-Wellenlängenbereichs. Ferner ist an der Austrittsseite der Faser eine Resonatoreinheit vorgesehen, um aus der Faser austretendes Licht in die Faser vorzugsweise frequenzselektiv zurück zu koppeln. Erfindungsgemäß weist die Resonatoreinheit einen ersten und einen zweiten Resonatorspiegel auf. Der erste Resonatorspiegel ist unmittelbar mit der Austrittsseite der Faser verbunden. Dies kann beispielsweise durch Aufdampfen dieses Spiegels erfolgen. Der zweite Resonatorspiegel ist im Abstand zu der Austrittsseite der Faser vorgesehen.

Durch das Vorsehen von zwei oder mehr Resonatorspiegeln in einer Resonatoreinheit an der Austrittsseite der Faser ist eine Laser-Emission bei zwei oder mehr Wellenlängen möglich. Der erste mit der Austrittsseite der Faser verbundene Resonatorspiegel ist vorzugsweise derart ausgebildet, dass er die gewünschte Wellenlänge in die Faser zurückreflektiert, die die schwächste Lichtverstärkung aufweist. Mit Hilfe des zweiten beabstandeten Resonatorspiegels kann sodann eine weitere ausgewählte Wellenlänge in die Faser zurückgekoppelt werden. Hierdurch werden die Wellenlängen des von dem Faser-Laser erzeugten Lichts ausgewählt.

Der erste Resonatorspiegel, der vorzugsweise durch Aufkleben mit der Austrittsseite der Faser verbunden ist, ist vorzugsweise für den Wellenlängenbereich des erzeugten Laser-Lichts mit der kleinsten Lichtverstärkung sowie im Bereich des Pumplichts hochreflektierend. Insbesondere beträgt der Reflexionsgrad für den Wellenlängenbereich der Laser-Emission 50 bis 99,9 %. Besonders bevorzugt ist ein Reflexionsgrad von 80 % bis 99,1 %. Dies hat zur Folge, dass 0,1 % bis 50 %, vorzugsweise 0,9 % bis 20 % des erzeugten Laserlichts ausgekoppelt werden können. Für die Pump-Wellenlänge beträgt der Reflexionsgrad vorzugsweise mehr als 50 %, insbesondere mehr als 75 %. Mit einem derartigen Spiegel ist eine Laser-Emission am schwächsten Übergang bei gleichzeitiger guter Ausnutzung des Pumplichts möglich.

Der zweite Resonatorspiegel ist vorzugsweise für einen weiteren Wellenlängenbereich hochreflektierend. Es ist somit möglich, weitere von den Ionen emittierte Strahlung in die Faser zurück zu koppeln und zur Anregung der Laser-Emission bei zusätzlichen Wellenlängen zu nutzen.

Weitere Resonatorspiegel können vorgesehen werden, die für einen bestimmten Wellenlängenbereich hochreflektierend und für die übrigen Wellenlängenbereiche transparent oder äußerst wenig reflektierend sind. Mit Hilfe derartiger Resonatorspiegel können somit gezielt bestimmte Wellenlängenbereiche in die Faser zurückgekoppelt werden. Es handelt sich somit um einen spektral gestaffelten Mehrfach-Resonator. Hierdurch ist es möglich, für den Laser-Übergang mit der kleinsten Verstärkung die Lichtverluste zu minimieren und/oder die erforderliche Pumpleistung zu verkleinern. Durch die spektral selektive Rückkopplung von Licht durch die weiteren Spiegel ist das Anschwingen des Laser-Oszillators bei den anderen gewünschten Wellenlängen bzw. Wellenlängenbereichen sichergestellt. Die Erfindung ermöglicht die umschaltbare oder gleichzeitige Emission auf mehreren Laser-Übergängen bei Verwendung einer Pumplichtquelle mit kleiner Leistung, z.B. einer Laserdiode. Eine weitere Methode für die Erzeugung von gleichzeitiger oder umschaltbarer Licht-Emission bei mehreren Wellenlängen besteht in der kontrollierten Positionierung des ersten Resonatorspiegels in vorzugsweise bis zu 3 µm Abstand von der Endfläche der Glasfaser. Die Änderung des dadurch entstehenden Luftspalts erlaubt die kontrollierte Modifizierung des Spektrums des rückgekoppelten Lichts.

Da das von der Faser erzeugte Laserlicht von dem Wellenlängenbereich des zurückgekoppelten Lichts abhängig ist, können Spiegel, die unterschiedliche Wellenlängenbereiche reflektieren, eingesetzt bzw. ausgetauscht werden. Vorzugsweise ist dem zweiten oder jedem weiteren Resonatorspiegel eine Blende und/oder Farbfilter zur Steuerung des Wellenlängenbereichs des zu erzeugenden Laserlichts vorgeschaltet. Durch eine derartige Anordnung ist sichergestellt, dass beispielsweise nur Licht einer bestimmten Wellenlänge bzw. eines bestimmten Wellenlängenbereichs von dem Spiegel zurückgekoppelt wird. Es ist daher auch möglich, einen Resonatorspiegel vorzusehen, der in mehreren Wellenlängenbereichen reflektierend ist und mit Hilfe geeigneter Blenden beispielsweise nur einen dieser Farbbereiche auszuwählen. Es ist durch eine entsprechende Steuerung der Blende, des Farbfilters und/oder des Spiegelabstandes möglich, Laserlicht gleichzeitig in mindestens zwei oder mehr Wellenlängenbereichen zu erzeugen. Dies kann z.B. durch partielle Abdeckung der Resonatorspiegel erreicht werden. Hierdurch kann das Verhältnis der Lichtleistung einzelner Wellenlängenbereiche eingestellt werden.

Vorzugsweise weist die Resonatoreinheit zur Einstellung des in die Faser zurückgekoppelten Wellenlängenbereichs eine Kollimationslinse auf, die bzgl. der Austrittsseite der Faser in Längsrichtung der Faser verschiebbar ist. Durch das Verschieben der Kollimationslinse ist es möglich, einzelne von dem Resonatorspiegel bzw. den Resonatorspiegeln reflektierte Wellenlängenbereiche in die Faser einzukoppeln. Hierbei kann die Kollimationslinse vorzugsweise derart eingesetzt werden, dass sie zur Steuerung der Emission in den entsprechenden Wellenlängenbereichen dient.

Vorzugsweise ist an der Eintrittsseite der Faser ein für den Wellenlängenbereich des Pumplichts transparenter Einkoppelspiegel vorgesehen. Um den Wirkungsgrad der Verstärkung von Strahlung im Bereich der gewünschten Emissionswellenlänge der Faser einzustellen, ist der Einkoppelspiegel auf der der Eintrittsseite der Faser zugewandten Seite ausreichend hochreflektierend für den Emissions-Wellenlängenbereich des Faser-Lasers.

Auf Grund der Rückkopplung eines Teils des Lichts der Pumplichtquelle können sich die Eigenschaften der Pumplichtquelle und dadurch auch jene des Faser-Lasers ändern. Der Wellenlängenbereich des Pumplichts wird insbesondere vom ersten Resonatorspiegel in Richtung der Eintrittsseite reflektiert. Das von dem ersten Resonatorspiegel reflektierte Licht wird nicht vollständig von in der Faser enthaltenen Ionen absorbiert. Da der Eintrittsspiegel an der Eintrittsseite der Faser für die Pumpwellenlänge transparent ist, tritt der nichtabsorbierte Teil an dem Einkoppelspiegel in Richtung der Pumplichtquelle, z.B. der Laserdiode, aus. Dies kann zur Modifizierung des Spektrums der Laserdiode und bei starken Rückreflexen auf Grund der Leistungsüberhöhung an der Stirnfläche der Laserdiode zu Verringerungen der Lebensdauer der Laserdiode führen. Rückreflexionen entstehen ferner an der Eintrittsseite der Faser, da die Eintrittsseite nicht perfekt entspiegelt ist, so dass Reflexionen auftreten. Alle Arte von Reflexionen können nicht nur zu den beschriebenen Störungen der Pumplichtquelle, wie z.B. der Laserdiode, sondern auch zu Störungen in anderen Teilen des Faser-Lasers führen. Beispielsweise ist in dem Gehäuse der Laserdiode üblicherweise eine Photodiode eingebaut, die als Leistungsmonitor des Faser-Lasers dient. Das Signal dieser Photodiode wird durch die Rückreflexe verfälscht.

Vorstehendes Problem kann durch Vorsehen einer optischen Isolation bzw. optischen Entkopplung der Pumplichtquelle von der Eintrittsseite des Lasers gelöst werden. Hierzu ist es bekannt, sog. Faraday-Isolatoren einzusetzen.

Zeigt die Faser keine Doppelbrechung, kann vorzugsweise ein optischer Isolator eingesetzt werden, der aus einem Polarisationsfilter und einer λ/4-Scheibe besteht, durch die der linear polarisierte Strahl vollständig zirkular polarisiert wird. Bei einem erneuten Durchgang eines reflektierten Strahls durch die λ/4-Scheibe in Richtung der Pumplichtquelle erfolgt erneutes Transformieren des Strahls. Hierbei entsteht ein linear polarisierter Strahl, der um 90° gegenüber dem ursprünglich von der Pumplichtquelle abgegebenen Strahl gedreht ist. Ein derartiger Strahl kann den Polarisationsfilter nicht mehr passieren.

Vorzugsweise sind bei dem erfindungsgemäßen Faser-Laser der erste Resonatorspiegel und/oder der Einkoppelspiegel unmittelbar an dem entsprechenden Faserende vorgesehen. Beispielsweise ist es möglich, das Faserende mit einer entsprechenden spiegelnden Schicht zu bedampfen.

Vor dem Anordnen des Spiegels, beispielsweise durch Bedampfen der Faserenden, werden die Faserenden vorzugsweise mit einem Material ähnlicher Härte umschlossen und sodann gemeinsam poliert. Aufgrund der ähnlichen, idealerweise identischen Härte der Faser und des die Faser umschließenden Materials kann eine hochplane Ebene erzeugt werden. Bei dem das Faserende umschließenden Material handelt es sich vorzugsweise um bei UV-Bestrahlung polymerisierenden Kunststoff.

Das Aufdampfen von Spiegeln auf die Faser-Stirnflächen ist jedoch kompliziert. Insbesondere die Reproduktion vieler identischer Spiegel ist äußerst aufwändig.

Eine alternative Methode zur Erzeugung einer hochplanen Ebene auf der Faserstirnfläche besteht darin, die Faser zu brechen, vorzugsweise mit einem Faser-Schneidegerät.

Erfindungsgemäß erfolgt daher vorzugsweise ein Aufkleben der auf einem Trägermaterial vorgesehenen Spiegel auf die Faserenden, d.h. auf der Eintrittsseite und/oder der Austrittsseite der Faser. Ein derartiges Aufkleben von Spiegeln auf Faserenden eines Lasers stellt eine unabhängige Erfindung dar. Beispielsweise ist das Aufkleben von Spiegeln, wie im folgenden beschrieben, auch bei herkömmlichen Faser-Lasern oder anderen Vorrichtungen, die eine Faser mit verspiegeltem Ende aufweisen, einsetzbar.

Vorzugsweise erfolgt das Aufkleben mit einem geringe Viskosität aufweisenden Klebstoff. Insbesondere ist der Klebstoff als Zwei-Komponenten-Epoxidharzkleber ausgebildet.

Vorzugsweise handelt es sich bei dem Spiegel um einen aus mehreren dielektrischen Schichten bestehenden und auf einem Glas-Substrat, vorzugsweise im Vakuum hergestellten Spiegel. Insbesondere weist der Spiegel zwei Typen von Schichten aus unterschiedlichem Material auf, die abwechselnd zueinander angeordnet sind. Die beiden sich abwechselnden Schichten bestehen vorzugsweise aus Hafniumoxid bzw. Siliziumoxid. Besonders bevorzugt ist es, dass der erste Resonatorspiegel zwei mehrschichtige Teilsysteme aufweist, die das Laserlicht bzw. Pumplicht reflektieren.

Erfindungsgemäß wird vorzugsweise die Faser mit zumindest einer Seltenen Erde oder Lanthanide dotiert. Vorzugsweise werden Praseodym- und/oder Ytterbium- und/oder Erbium-Ionen zur Dotierung der Faser verwendet. Die Dotierung mit Praseodym-Ionen erfolgt hierbei vorzugsweise im Bereich von 500 - 5000 ppm, insbesondere im Bereich von 2000 - 3000 ppm. Die Ytterbium-Ionen, die ggf. zusätzlich zu den Praseodym-Ionen der Faser zudotiert werden, werden vorzugsweise in einer Menge von 5 000 - 50 000 ppm, vorzugsweise von 10000 - 30000 ppm, zudotiert.

Um Laser-Emmission in den transversalen Grundmoden zu ermöglichen, ist die Faser vorzugsweise derart ausgebildet, dass die Abschneide-Wellenlänge für höhere Wellenleitermoden der Faser um 5 % - 15 % größer ist als die kürzeste Laser-Emissions-Wellenlänge. Die Abschneide-Wellenlänge kennzeichnet die kürzests Wellenlänge, die von der Faser nur in den transversalen Grundmoden geführt wird.

Vorzugsweise wird die Pumplichtquelle, bei der es sich vorzugsweise um eine Laser-Diode handelt, mit Hilfe eines Regelsignals gesteuert, um die Emissionsleistung des Faser-Lasers regeln zu können. Hierzu wird aus der Stärke der Emissionsleistung ein Regelsignal abgeleitet, das zum Ansteuern der Pumplichtquelle dient.

Eine bevorzugte Regelung wird beispielsweise nach folgendem Verfahren durchgeführt: Nach der Kollimation des austretenden Lichtes der Faser wird an einem polarisationsunabhängigen Strahlteiler ein Teil des Laserlichts (≈ 33 %) ausgekoppelt. Durch ein Schmalbandfilter wird dieses Licht auf eine Photodiode fokussiert. Das Photodiodensignal wird elektronisch verstärkt, invertiert und differenziert. Mit dem so verarbeiteten Signal wird der Laserdiodenstrom moduliert, wobei die Stärke der Modulation einstellbar ist. Die Schaltung ist so aufgebaut, dass ein Teil des Konstantstroms über einen Transistor an der Laserdiode vorbeigeleitet wird. Auf Grund der Benutzung der Konstantstromquelle mit vorgegebenem maximalem Strom kann die Regelelektronik die empfindliche Laserdiode nicht beschädigen. Wesentliche Bestandteile der Schaltung sind Photodiode, Lastwiderstand, Verstärker, invertierender Differenzierer und ein Transistor, der von einem Operationsverstärker angesteuert wird.

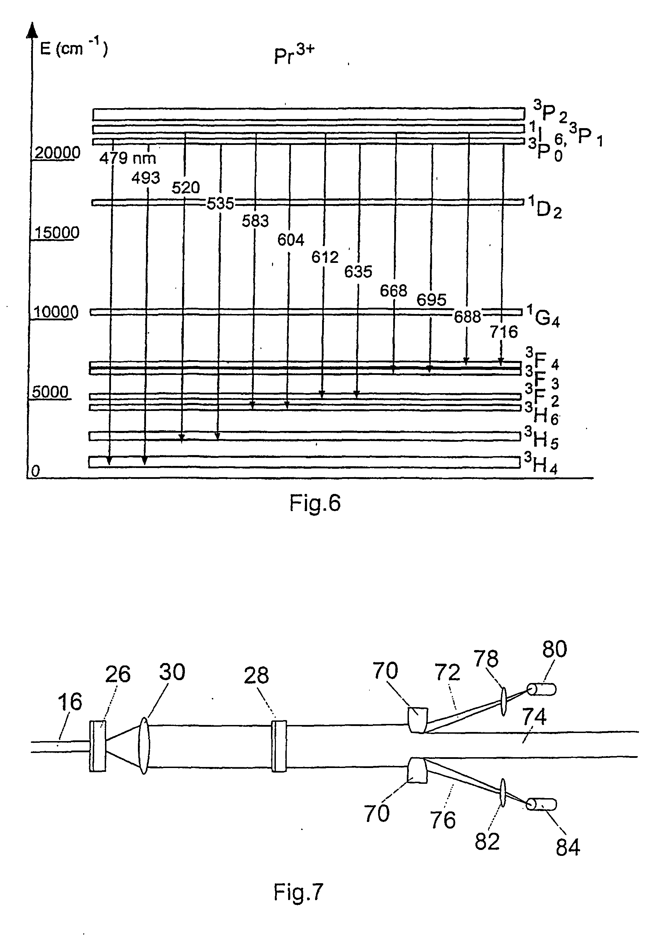

Eine bevorzugte Einrichtung für die gleichzeitige Herstellung von zwei Regelsignalen ist in Fig. 7 dargestellt. Bei gleichzeitiger zwei- oder mehrfarbiger Emission des Lasers sind zwei oder mehr Regelkanäle erforderlich.

Die Modulation des Laserdiodenstroms soll proportional zur invertierten Ableitung des Photodiodensignals sein, jedoch erfährt das Photodiodensignal durch den Schaltkreis eine unerwünschte Phasenverschiebung. Da der Faser-Laser eine Leistungskontrolle zumindest bis zur Grenzfrequenz von 500 kHz erfordert, werden die einzelnen Teile der Schaltung (Photodiode mit Lastwiderstand, Verstärker, Differenzierer) vorzugsweise für ca. 10 MHz Grenzfrequenz ausgelegt.

Testmessungen, bei denen die Photodiode von einer modulierten Leuchtdiode beleuchtet wurde, ergaben: Bei 500 kHz Frequenz der Leistungsschwankungen erzeugt die Schaltung ca. 25° zusätzliche Phasenverschiebung, bei geringeren Frequenzen entstehen entsprechend kleinere Verschiebungen.

Der erfindungsgemäße Faser-Laser ist insbesondere als Lichtquelle für konfokale Mikroskope, insbesondere ein Fluoreszenzmikroskop, geeignet. Derartige Mikroskope sind besonders gut für das Hochdurchsatz-Screening von chemischen und/oder biologischen Proben einsetzbar.

Nachfolgend wird die Erfindung anhand bevorzugter Ausführungsformen unter Bezugnahme auf die Zeichnungen näher erläutert.

Es zeigen:
- Fig. 1: eine schematische Ansicht eines prinzipiellen Aufbaus einer bevorzugten Ausführungsform des erfindungsgemäßen Faser-Lasers,
- Fig. 2: eine schematische Darstellung einer bevorzugten Ausführungsform der erfindungsgemäßen optischen Entkopplungseinrichtung,
- Fign.3a und 3b: Diagramme der Wellenlänge über der Reflexion eines Ein-bzw. Auskoppelspiegels,
- Fig. 4: eine schematische Darstellung von Justageproblemen beim Anbringen eines Spiegels auf einem Faserende,
- Fig. 5: eine schematische Darstellung eines Justageaufbaus zum Justieren eines Spiegels auf einem Faserende,
- Fig. 6: ein Termschema von Praseodym in einem Wirtsmaterial ZBLAN und
- Fig. 7: eine schematische Darstellung einer Auskoppeleinheit.

Der erfindungsgemäße Faser-Laser weist eine Pumplichtquelle 10 auf, bei der es sich vorzugsweise um eine Laserdiode handelt.

Das von der Pumplichtquelle 10 abgegebene Licht wird durch eine Linse 12 in eine Eintrittsseite 14 einer Faser 16 eingekoppelt. Hierzu ist an der Eintrittsseite 14 ein Einkoppelspiegel 18 vorgesehen, der vorzugsweise auf das Faserende aufgeklebt ist.

Durch das in die Faser 16 eingekoppelte Laserlicht erfolgt eine Anregung von in der Faser 16 vorgesehenen Ionen, so dass diese Laserlicht in der gewünschten Wellenlänge abgeben. Das Laserlicht tritt an einer Austrittsseite 20 der Faser 16 aus dieser aus und kann durch einen halbdurchlässigen Spiegel 22 in Richtung eines Pfeils 24 oder durch einen Spiegel 28 in Richtung eines Pfeils 25 ausgekoppelt werden.

Erfindungsgemäß ist eine Resonatoreinheit vorgesehen, durch die ein Teil des aus der Austrittsseite 20 der Faser 16 austretenden Lichts in die Faser 16 zurückgekoppelt wird. Hierzu weist die Resonatoreinheit einen ersten Resonatorspiegel 26 auf, der vorzugsweise auf die Austrittsseite 20 der Faser 16 aufgeklebt ist. Der erste Resonatorspiegel 26 ist für den Wellenlängenbereich des zu erzeugenden Laser-Lichts sowie des Pumplichts hochreflektierend. Durch die Rückreflexion des Pumplichts in die Faser 16 erfolgt zusätzlich eine Anregung der in der Faser 16 vorhandenen Ionen. Hierdurch ist der Wirkungsgrad des Faser-Lasers erhöht. Licht anderer Wellenlängen, das durch den ersten Resonatorspiegel 26 nicht reflektiert wird, kann durch den zweiten Resonatorspiegel 28, der vorzugsweise für einen weiteren, zur Erzeugung von Laser-Licht vorgesehenen Wellenlängenbereich reflektierend ist, reflektiert werden. Das von dem zweiten Resonatorspiegel 28 reflektierte Licht wird von einer Kollimationslinse 30 in die Austrittsseite 20 der Faser 16 eingekoppelt.

Durch eine in Richtung eines Pfeils 32 verschiebbare Blende 34 oder einen Farbfilter ist es möglich, festzustellen, wie viel Licht des zweiten gewünschten Wellenlängenbereichs wieder in die Faser 16 eingekoppelt werden soll. Das Verschieben der Farbblende 34 kann durch geeignete elektrische und/oder magnetische Antriebseinrichtungen erfolgen.

Da die Ablenkung des Lichts durch die Linse 30 wellenlängenabhängig ist, kann auch durch Verschieben der Linse 30 in Richtung eines Pfeils 36 definiert werden, welcher Wellenlängenbereich in die Austrittsseite 20 der Faser 16 eingekoppelt werden soll.

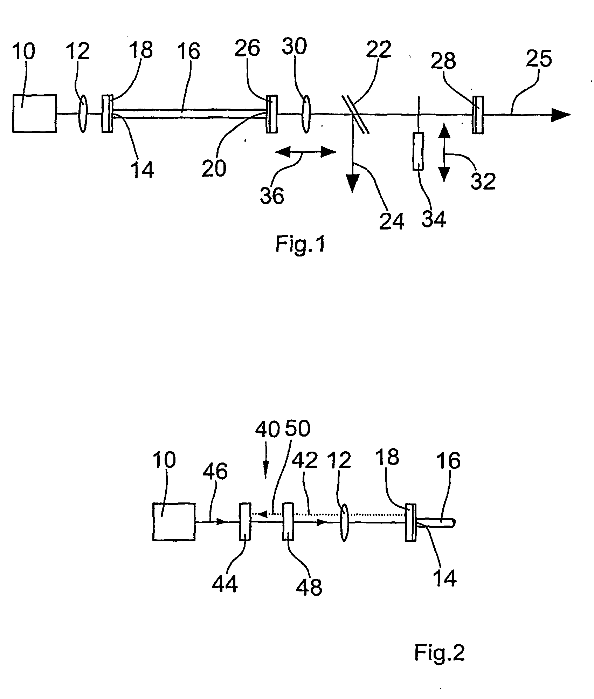

Eine in Fig. 2 dargestellte optische Entkopplungseinrichtung 40 ist zwischen der Linse 12 und der Pumplichtquelle 10 angeordnet. Die optische Entkopplungseinrichtung 40 dient dazu, zu verhindern, dass beispielsweise auf Grund von Justagefehlern, Fehlern in der Oberfläche des Spiegels 18 u.dgl., zurückreflektierte Lichtstrahlen 42, die die Wellenlänge der Pumplichtquelle 10 aufweisen, in die Pumplichtquelle 10 zurückreflektiert werden und dort Störungen verursacht.

Hierzu weist die Entkopplungseinrichtung 40 einen Polarisationsfilter 44 auf, der in Richtung eines von der Pumplichtquelle 10 abgegebenen Lichtstrahls 46 der Pumplichtquelle nachgeschaltet ist. Der Polarisationsfilter 44 ist derart ausgebildet, dass das von der Pumplichtquelle 10 abgegebene Licht 46 den Polarisationsfilter 44 ungehindert passieren kann. Danach passiert das Licht 46 eine Polarisationsänderungseinrichtung 48, wie eine λ/4-Scheibe, durch die das von der Pumplichtquelle 10 abgegebene linear polarisierte Licht 46 zirkular polarisiert wird. Ein reflektierter, zirkular polarisierter Strahl 42 tritt erneut durch die λ/4-Scheibe 48 und wird hierbei linear polarisiert. Dies hat zur Folge, dass der Lichtstrahl 50 den Polarisationsfilter 44 nicht mehr durchdringen kann.

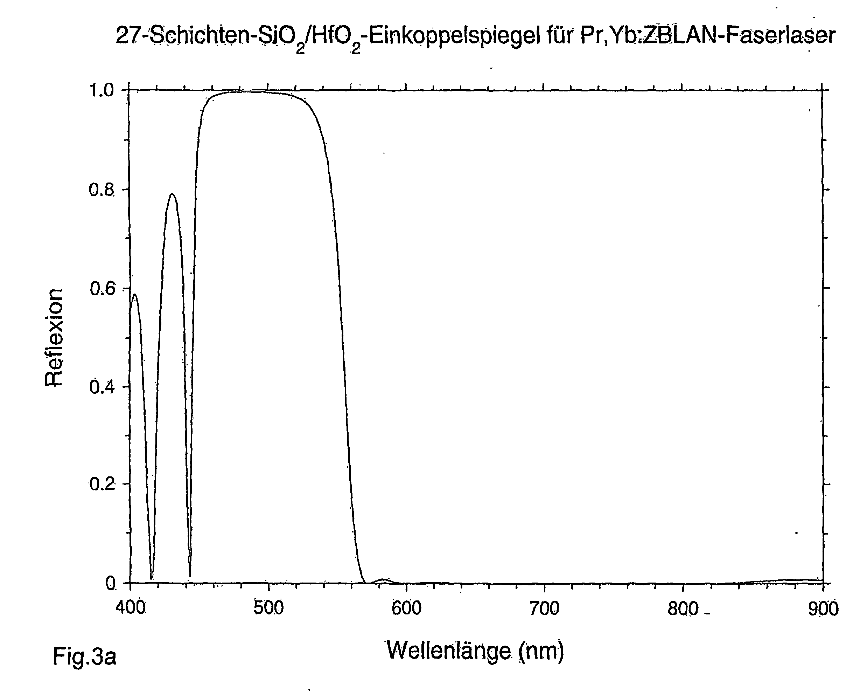

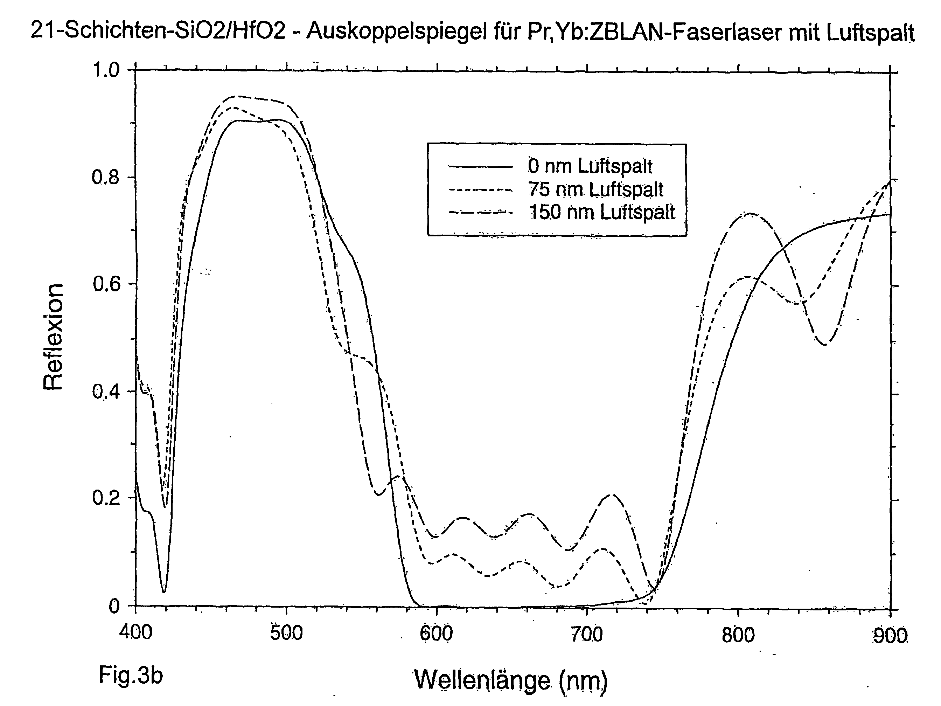

Nachstehend wird anhand der Fign. 3-6 ein bevorzugtes Anordnen des ersten Resonatorspiegel 26 bzw. des Einkoppelspiegels 18 an der Austrittsseite 20 bzw. der Eintrittsseite 14 der Faser 16 näher erläutert.

Zur Herstellung der Spiegel 18,26 wird als Substrat vorzugsweise ein 0,25 mm - 0,5 mm starkes Glasplättchen hoher Oberflächengüte verwendet. In einer kommerziellen Aufdampfanlage erfolgt die Bedampfung der Substrate mit "harten" Schichten vorzugsweise aus HfO₂ und SiO₂.

Bei der direkten Verspiegelung der Faser befindet sich das dielektrische Schichtsystem zwischen dem Glas der Faser und der Raumluft. Bei dem erfindungsgemäßen Aufkleben des Spiegels befindet sich dagegen das Schichtsystem zwischen dem Faserglas und dem Glasplättchen. In diesem Fall sind andere Schichtsysteme erforderlich als bei direkter Verspiegelung. Zusätzlich zum Laserspiegel, der auf der polierten Fläche aufliegt, wird auf der anderen Substratseite eine Entspiegelung für z.B. 850 nm aufgedampft, um störende Reflexe zu unterbinden.

Als Beispiele sind nachfolgend ein Einkoppelspiegel mit 0,35 % Transmission bei 491 nm und ein Auskoppelspiegel mit 10 % Transmission bei 491 nm beschrieben:
Fign. 3a und 3b zeigen die berechneten Reflexionsverläufe der beiden Spiegel; nachstehende Tabellen listen die Folgen der dielektrischen Schichten auf.

### 27-Schichten-SiO₂/HfO₂-Einkoppelspieget für Pr,Yb:ZBLAN-Faserlaser

| Nr. | Material | Schichtdicke | Bezugswellenlänge |
|---|---|---|---|
| - | Glas (n = 1,5) | - | - |
| 1 | SiO₂ | λ/4 | 478 |
| 2 | HfO₂ | λ/8 | 478 |
| 3 | SiO₂ | λ/4 | 478 |
| 4 | HfO₂ | λ/4 | 478 |
| 5 | SiO₂ | λ/4 | 478 |
| 6 | HfO₂ | λ/4 | 478 |
| 7 | SiO₂ | λ/4 | 478 |
| 8 | HfO₂ | λ/4 | 500 |
| 9 | SiO₂ | λ/4 | 500 |
| 10 | HfO₂ | λ/4 | 500 |
| 11 | SiO₂ | λ/4 | 500 |
| 12 | HfO₂ | λ/4 | 500 |
| 13 | SiO₂ | λ/4 | 500 |
| 14 | HfO₂ | λ/4 | 500 |
| 15 | SiO₂ | λ/4 | 500 |
| 16 | HfO₂ | λ/4 | 500 |
| 17 | SiO₂ | λ/4 | 500 |
| 18 | HfO₂ | λ/4 | 500 |
| 19 | SiO₂ | λ/4 | 500 |
| 20 | HfO₂ | λ/4 | 500 |
| 21 | SiO₂ | λ/4 | 478 |
| 22 | HfO₂ | λ/4 | 478 |
| 23 | SiO₂ | λ/4 | 478 |
| 24 | HfO₂ | λ/4 | 478 |
| 25 | SiO₂ | λ/4 | 478 |
| 26 | HfO₂ | λ/8 | 478 |
| 27 | SiO₂ | λ/4 | 478 |
| - | Faser (n=1,5) | | |

### 21-Schichten-SiO₂/HfO₂-Auskoppelspiegel für Pr,Yb:ZBLAN-Faserlaser

| Nr. | Material | Schichtdicke | Bezugswellenlänge |
|---|---|---|---|
| - | Glas (n = 1,5) | - | - |
| 1 | HfO₂ | λ/4 | 967 |
| 2 | SiO₂ | λ/4 | 967 |
| 3 | HfO₂ | λ/4 | 834 |
| 4 | SiO₂ | λ/4 | 834 |
| 5 | HfO₂ | λ/4 | 911 |
| 6 | SiO₂ | λ/4 | 911 |
| 7 | HfO₂ | λ/4 | 867 |
| 8 | SiO₂ | λ/4 | 867 |
| 9 | HfO₂ | 3λ/4 | 467 |
| 10 | SiO₂ | λ/4 | 467 |
| 11 | HfO₂ | λ/4 | 489 |
| 12 | SiO₂ | λ/4 | 489 |
| 13 | HfO₂ | λ/4 | 489 |
| 14 | SiO₂ | λ/4 | 489 |
| 15 | HfO₂ | λ/4 | 500 |
| 16 | SiO₂ | λ/4 | 500 |
| 17 | HfO₂ | λ/4 | *500* |
| 18 | SiO₂ | λ/4 | 500 |
| 19 | HfO₂ | λ/4 | 444 |
| 20 | SiO₂ | λ/4 | 444 |
| 21 | HfO₂ | 0,631*λ/4 | 444 |
| (22) | Luft | 0 bis 3 µm | - |
| - | Faser (n=1,5) | | |

Der Reflexionsverlauf der Schichtsysteme entspricht den Anforderungen für blauen Laserbetrieb. Der Einkoppelspiegel zeigt bei 491 nm 99,65 % und von 570 - 900 nm geringe Reflexion.

Der Auskopplungsspiegel zeigt bei 491 nm 90 %, bei 850 nm etwa 70 % und von 590 - 700 nm geringe Reflexionen. Ein Luftspalt (Schicht 22) verändert die spektrale Reflexionskurve in Abhängigkeit von seiner Dicke (Fig. 3b). Bei der Dicke 75 nm beträgt die Reflexion bei 635 nm z.B. etwa 7 % und bei 150 nm etwa 14 %. Eine weitere Zunahme der Luftspalt-Dicke läßt die Reflexion wieder ab- und zunehmen. Die Einstellung der Dicke des Luftspaltes erlaubt daher Emission von Laser-Licht im gewünschten Spektralbereich.

Aus den bedampften Substraten, die einen Durchmesser von 25 mm haben, können viele kleine Laserspiegel gebrochen werden. Je ein Spiegel wird auf den Faserstecker aufgebracht, justiert und fixiert.

Das beschriebene Konzept vereinigt Vorteile der direkten Bedampfung mit denen der auswechselbaren externen Verspiegelung: Die verspiegelte Faser ist eine kompakte Einheit, die einfach in optische Aufbauten integriert werden kann. Andererseits lassen sich die Spiegel einfach austauschen, was vorteilhaft ist, wenn z.B. die Ausgangsleistung des Faser-Lasers optimiert werden soll. Die spektralen Eigenschaften aller Spiegel, die aus einem Substrat gebrochen wurden, sind identisch.

Methoden, die eine exakte Justierung und Fixierung der kleinen Spiegel auf dem Faserstecker ermöglichen, wurden entwickelt und werden nachfolgend beschrieben.

Bei einem Faser-Laser mit auf den Faserendflächen aufgeklebten Spiegeln treten unerwünschte Verluste auf, wenn die Spiegel nicht perfekt an der Faser aufliegen. Für optimale Rückkopplung muss das auf die Faser zurückreflektierte Licht gleichen Strahldurchmesser, gleiche Lage und Strahlachse haben wie die ursprüngliche Fasermode. Im folgenden werden die Verluste, die infolge zweier Arten von Fehljustierungen entstehen, abgeschätzt.

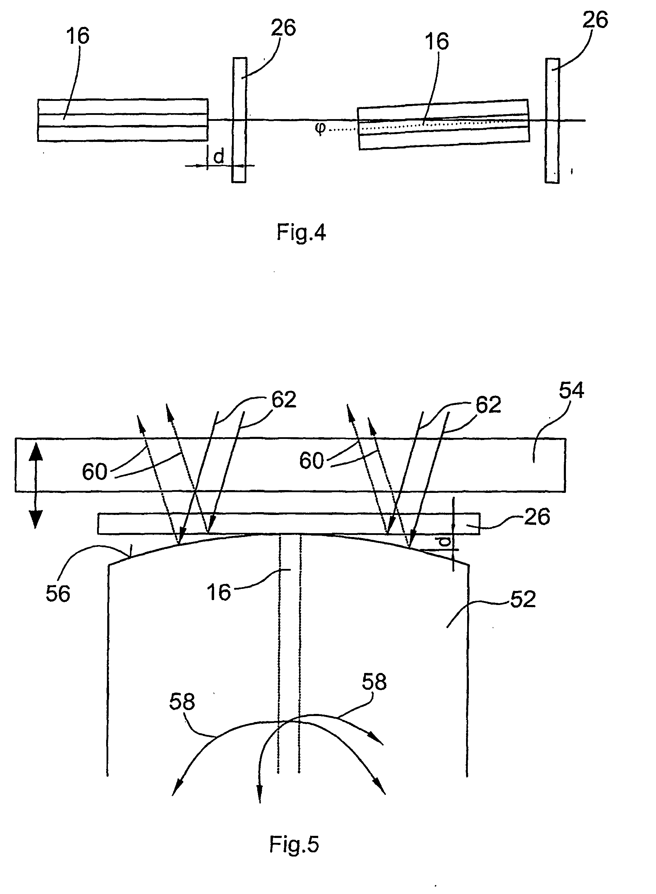

Existiert zwischen der Faser 16 und dem Spiegel 18 bzw. 26 ein Spalt der Dicke d oder ist der Spiegel gegen die Faser-Endfläche verkippt (Fig. 4), so treten Verluste auf, weil der austretende Strahl sich aufweitet und nicht wieder vollständig in den Kern eingekoppelt werden kann. Misst der Luftspalt d (Fig. 4) zwischen Faser 16 und Spiegel 26 beispielsweise einen Mikrometer, so ergeben sich Verluste von ca. 3 %. Ist darüber hinaus der Spiegel um einen Winkel ϕ = 1° gegen die Faser 16 verkippt, betragen die zusätzlichen Verluste 6 %. Sollen die Verluste in der Größenordnung von 1 % bleiben, dürfen für den Abstand 0,5 µm und für die Verkippung 0,4° nicht überschritten werden. Soll das Emissionsspektrum des Lasers durch Wahl der Luftspalt-Dicke eingestellt werden, so ist der bevorzugte Einstellungsbereich 0 - 0,5 µm.

Die aufgedampften harten Schichten der Spiegel widerstehen den hohen Leistungsdichten (> 100 MW/cm² bei 491 nm und bei 850 nm) . Degradations- oder Schrumpfprozesse, die das Reflexionsverhalten ändern, werden nicht beobachtet.

Die unerwünschte Änderung der spektralen Reflexionskurve durch den Luftspalt lässt sich ausschalten, indem Immersionsöl (n ≈ 1,5) in den Spalt eingebracht wird.

Die Rest-Ungenauigkeit der Justierung des Spiegel abstandes sollte in der Größenordnung der Wellenlänge des sichtbaren Lichts liegen. Die geforderte Genauigkeit kann erreicht werden, indem man Interferenzeffekte mit sichtbarem Licht ausnutzt. Mit diesen Effekten können Strukturen erkannt werden, die kleiner sind als die Wellenlänge des verwendeten Lichts.

Beispielsweise können Interferenzen des Lichtes, das von der Spiegeloberfläche und der Faser-Endfläche reflektiert wird (60 bzw. 61), die sog. "Newtonschen Ringe", benutzt werden, um die Verkippung und den Abstand von Spiegel und Faserachse zu minimieren.

Für sehr kleine Spaltdicken gibt es destruktive Interferenz, so dass das Interferenzbild bei aufliegendem Spiegel und senkrechter Betrachtung am Auflagepunkt ein Minimum nullter Ordnung hat. Da für konstruktive Interferenz der Gangunterschied ein ganzzahliges Vielfaches der halben Wellenlänge sein muss, beträgt die Spaltdicke im Maximum des ersten hellen Interferenzringes gerade λ/4. Mit dem Interferenzbild lässt sich so die Spaltdicke gut abschätzen. Wird die Platte verkippt, so ändert sich der Auflagepunkt und mit ihm die Lage des Ringsystems. Bei bekanntem Krümmungsradius der konvexen Fläche lässt sich zusätzlich die Verkippung abschätzen.

Um die Newton-Ringe zu nutzen, wurde der folgende bevorzugte Aufbau entwickelt: Die Interferenzstruktur entsteht zwischen der polierten, leicht konvexen Oberfläche eines Fasersteckers 52, der die Faser 16 enthält, und dem dielektrischen Spiegel, der auf einem planen Glassubstrat 26 aufgedampft ist.

Der Faserstecker 52 wird in einem Spiegelhalter fixiert, der eine Winkeljustierung ermöglicht. Auf die polierte Oberfläche 56 des Steckers 52 wird ein kleines Spiegelfragment 26 gelegt. Die Glasplatte 54, die an einem x-y-z-Verschiebetisch montiert ist, wird benutzt, um den Spiegel 26 anzudrücken. Der Auflagepunkt des Spiegels 26 auf dem Stecker 52 wird durch Verkippung des Steckers 52 justiert. Die Justierarbeiten werden durch Beobachtung der Interferenzen mit einem binokularen Mikroskop, das auf die Stirnseite des Fasersteckers 52 gerichtet ist, kontrolliert. Die gestrichelt dargestellten Pfeile 60 repräsentieren hierbei in Richtung des Mikroskops abgegebenes und die als durchgezogene Linien 62 dargestellten Pfeile das von einer Beleuchtungseinrichtung kommende Licht. Der Kontrast des entstehenden Interferenzmusters hängt von der Art des einfallenden Lichtes und den Reflexionseigenschaften der Grenzflächen ab. Für einen hohen Kontrast des Interferenzbildes müssen die beiden Grenzflächen gleichwertig reflektieren, und das Licht muss monochromatisch sein.

Zur Justage kommen vorzugsweise zwei Lichtquellen zum Einsatz: Für Justierarbeiten wird das quasi-monochromatische Licht einer Natriumdampflampe benutzt. In ein flexibles Glasfaserbündel eingekoppelt kann das Licht so geführt werden, dass die Faserendfläche fast senkrecht beleuchtet wird. Eine Halogenlampe dient der Beleuchtung des Aufbaus und der Lokalisierung der Glasfaser im Keramikstecker.

Nachdem der Spiegel 26 justiert ist, wird er am Stecker 52 festgeklebt.

Im folgenden werden anhand von Fig. 6 die Vorteile der Verwendung von Praseodym als der Faser 16 zudotierte Seltene Erde näher erläutert.

Das dreiwertige Praseodym-Ion im Wirtsmaterial ZBLAN bietet 12 Laserübergänge im sichtbaren Bereich. Die Vielfalt der Farben macht Praseodym zu einem sehr vorteilhaften Ion für Laser-Emission in mehreren Spektralbereichen, zumal neben einfarbiger auch umschaltbare und synchron mehrfarbige Emission möglich ist. In Fig. 6 sind die Energieniveaus und sichtbaren Übergänge des Praseodyms in ZBLAN eingezeichnet: Alle sichtbaren Übergänge gehen von den beiden thermisch gekoppelten Niveaus ³P₀ und ³P₁ aus.

In Fig. 8 ist dargestellt, wie aus der dichromatischen Strahlung des Faser-Lasers zwei getrennte Regelsignale für die Emission in den beiden Farben abgeleitet werden können. Hierzu ist auf der Auskoppelseite, d.h. in Fig. 8 rechts vom Auskoppelspiegel 26, eine spherische Linse 30 sowie ein externer Rückkoppelspiegel 28 vorgesehen. Durch den Rückkoppelspiegel 28 tritt ein kollimierter Laserstrahl hindurch, der auf eine geteilte Linse 70 trifft. Durch die geteilte Linse werden drei Strahlenbündel 72,74,76 erzeugt. Das Strahlenbündel 72 trifft auf einen im dargestellten Ausführungsbeispiel blauen Farbfilter 78. Der durch den Farbfilter hindurchtretende Teil des Strahlenbündels 72 trifft auf eine Photodiode 80. Entsprechend trifft das Strahlenbündel 76 auf einen im dargestellten Ausführungsbeispiel roten Farbfilter 82 und der durch dem Farbfilter 82 hindurchtretende Teil des Strahlenbündels 76 auf eine Photodiode 84.

## Patentansprüche

1. Faser-Laser, mit
einer Faser zur Laserlichterzeugung mit einer Eintrittsseite (14) und einer Austrittsseite (20),
einer Pumplichtquelle (10) zur Erzeugung von über die Eintrittsseite (14) in, die Faser (16) einkoppelbarem Pumplicht, und
einer an der Austrittsseite (20). der Faser vorgesehenen Resonatoreinheit (26,28), wobei
die Resonatoreinheit einen im Abstand zu der Austrittsseite (20) vorgesehenen zweiten Resonatorspiegel (28) zur Rückkopplung von an der Austrittsseite (20) austretendem Licht, zumindest eines Wellenlängenbereichs in die Faser, aufweist, **dadurch gekennzeichnet, daß** die Resonatoreinheit einen mit der Austrittsseite (20) verbundenen ersten Resonatorspiegel (26) aufweist.

2. Faser-Laser nach Anspruch 1, **dadurch gekennzeichnet, dass** der erste Resonatorspiegel (26) für den Wellenlängenbereich des Pumplichts hochreflektierend, insbesondere über 50 %, besonders bevorzugt über 75 %, reflektierend ist.

3. Faser-Laser nach Anspruch 1 oder 2, **dadurch gekennzeichnet, dass** der erste Resonatorspiegel (26) für den zu erzeugenden Laserlicht-Wellenlängenbereich mit der kleinsten Lichtverstärkung hochreflektierend ist, insbesondere einen Reflexionsgrad von 50 % - 99,9 %, vorzugsweise von 80 % - 99,1 %, aufweist, so dass 0,1 % - 50 %, vorzugsweise 0,9 % - 20 %, des erzeugten Laserlicht-Wellenlängenbereichs ausgekoppelt werden.

4. Faser-Laser nach einem der Ansprüche 1 - 3, **dadurch gekennzeichnet, dass** der zweite Resonatorspiegel (28) zumindest für einen weiteren Wellenlängenbereich hochreflektierend ist, für den der erste Resonatorspiegel (26) im Wesentlichen transparent ist, so dass Laserlicht in diesem weiteren Wellenlängenbereich erzeugt wird.

5. Faser-Laser nach einem der Ansprüche 1 - 4, **dadurch gekennzeichnet, dass** dem zweiten Resonatorspiegel (28) eine Farbblende (34) zur Steuerung des Wellenlängenbereichs des zu erzeugenden Laserlichts vorgeschaltet ist.

6. Faser-Laser nach einem der Ansprüche 1 - 5, **dadurch gekennzeichnet, dass** die Resonatoreinheit (26,28) mindestens einen weiteren, im Strahlengang hinter dem zweiten Resonatorspiegel (28) angeordneten Resonatorspiegel aufweist.

7. Faser-Laser nach Anspruch 6, **dadurch gekennzeichnet, dass** der mindestens eine weitere Resonatorspiegel zumindest einen Wellenlängenbereich reflektiert, für den der oder die im Strahlengang vorher angeordneten Resonatorspiegel im Wesentlichen transparent sind.

8. Faser-Laser nach einem der Ansprüche 1 - 7, **dadurch gekennzeichnet, dass** die Resonatoreinheit eine verschiebbare Kollimationslinse (30) zur Einstellung des in die Faser rückgekoppelten Wellenlängenbereichs aufweist.

9. Faser-Laser nach einem der Ansprüche 1 - 8, **dadurch gekennzeichnet, dass** an der Eintrittsseite (14) der Faser (16) ein für den Wellenlängenbereich des Pumplichts transparenter Einkoppelspiegel (18) vorgesehen ist.

10. Faser-Laser nach Anspruch 9, **dadurch gekennzeichnet, dass** der Einkoppelspiegel (18) für den mindestens einen Emissions-Wellenlängenbereich der Faser hochreflektierend ist.

11. Faser-Laser nach einem der Ansprüche 1 - 10, **dadurch gekennzeichnet, dass** zwischen der Pumplichtquelle (10) und der Eintrittsseite (14) der Faser (16) eine optische Entkopplungseinrichtung (40) vorgesehen ist.

12. Faser-Laser nach Anspruch 11, **dadurch gekennzeichnet, dass** die optische Entkopplungsvorrichtung (40) eine Polarisierungseinrichtung aufweist.

13. Faser-Laser nach Anspruch 12, **dadurch gekennzeichnet, dass** die Polarisationseinrichtung ein der Pumplichtquelle nachgeschaltetes Polarisationsfilter (44), das von dem von der Pumplichtquelle (10) abgegebenen Pumplicht passierbar ist und eine dem Polarisationsfilter (44) nachgeschaltete Polarisationsänderungseinrichtung (48) aufweist, so dass aus der Eintrittsseite (14) der Faser (16) austretendes Pumplicht oder im Bereich der Eintrittsseite (14) reflektiertes Pumplicht derart polarisiert ist, dass es das Polarisationsfilter (44) nicht passieren kann.

14. Faser-Laser nach Anspruch 13, **dadurch gekennzeichnet, dass** als Polarisationsänderungseinrichtung (48) eine ^{λ}/₄-Scheibe vorgesehen ist.

15. Faser-Laser nach einem der Ansprüche 1 - 14, **dadurch gekennzeichnet, dass** die Faserenden (14,20) durch ein Material ähnlicher Härte umschlossen sind und gemeinsam mit diesem Material poliert wurden.

16. Faser-Laser nach einem der Ansprüche 1 - 15, **dadurch gekennzeichnet, dass** die Spiegel (18,26) mehrschichtige dielektrische Spiegel sind.

17. Faser-Laser nach Anspruch 16, **dadurch gekennzeichnet, dass** die Schichten zwei unterschiedliche abwechselnd angeordnete Materialien aufweisen.

18. Faser-Laser nach einem der Ansprüche 1 - 17, **dadurch gekennzeichnet, dass** die Faser (16) mit 500 - 5 000 ppm, vorzugsweise 2 000 - 3 000 ppm Praseodym-Ionen dotiert ist.

19. Faser-Laser nach einem der Ansprüche 1 -17, **dadurch gekennzeichnet, dass** die Faser (16) mit 5 000 - 50 000 ppm, vorzugsweise mit 10 000 - 30 000 ppm Ytterbiom-Ionen dotiert sind.

20. Faser-Laser nach einem der Ansprüche 1 - 19, **dadurch gekennzeichnet, dass** die Abschneide-Wellenlänge für höhere Wellenleitermoden der Faser (16) um 5 % - 15 % größer ist als die kürzeste Laser-Emissions-Wellenlänge.

21. Faser-Laser nach einem der Ansprüche 1 - 20, **dadurch gekennzeichnet, dass** aus der Stärke der Emissionsleistung ein Regelsignal erzeugt wird, das durch Ansteuern der Pumplichtquelle (10) die Emissionsleistung des Faser-Lasers regelt.

22. Faser-Laser nach Anspruch 21, **dadurch gekennzeichnet, dass** das Regelsignal für das Pumplicht einen Anteil enthält, der proportional ist zum Negativen der zeitlichen Ableitung der Laser-Ausgleichsleistung, so dass schnelle Eigenschwingungen des Laserlichts gedämpft werden.

23. Faser-Laser nach Anspruch 21, **dadurch gekennzeichnet, dass** das Regelsignal für das Pumplicht Anteile enthält, die proportional sind zur Abweichung der Laser-Leistung von einem Sollwert und/oder zum zeitlichen Integral dieser Abweichung.

24. Faser-Laser nach einem der Ansprüche 1 - 23, **dadurch gekennzeichnet, dass** der Spalt (d) zwischen Faser-Endfläche (14,20) und aufgeklebtem Spiegel (18,26) durch ein Medium mit der Brechzahl nahe jener der Faser ausgefüllt ist.

25. Faser-Laser nach einem der Ansprüche 1 - 24, **dadurch gekennzeichnet, dass** die Faser (16) eine hohe numerische Apertur, insbesondere zwischen 0,25 und 0, 50, aufweist.

26. Verwendung des Faser-Lasers nach einem der Ansprüche 1 - 25 als Lichtquelle für ein konfokales Mikroskop, insbesondere für ein Fluoreszenzmikroskop.

## Claims

1. Fiber laser, comprising:
a fiber for laser light generation having an entrance end (14) and an exit end (20),
a pump light source (10) for generating pump light to be coupled via the entrance end (14) into the fiber (16), and
a resonator unit (26,28) provided at the exit end (20) of the fiber, wherein the resonator unit comprises a second resonator mirror (28) arranged in spaced relationship to the exit end (20), said second resonator mirror (28) being adapted for feeding light of at least one wavelength range emerging at the exit end (20) back into the fiber,
**characterized in that**
the resonator unit comprises a first resonator mirror (26) connected with the exit end (20).

2. Fiber laser according to claim 1, **characterized in that** the first resonator mirror (26) is highly reflecting for the wavelength range of the pump light, in particular the reflectivity amounts to more than 50 %, in a particularly preferred variant more than 75 %.

3. Fiber laser according to claim 1 or 2, **characterized in that** the first resonator mirror (26) is highly reflecting for the wavelength range with the smallest light amplification of the laser light to be generated, offering in particular a reflectivity of 50 % - 99.9 %, preferably 80 % - 99.1 %, such that 0.1 % - 50 %, preferably 0.9 % - 20 %, of the generated laser light wavelength range are coupled out.

4. Fiber laser according to one of claims 1-3, **characterized in that** the second resonator mirror (28) is highly reflecting for at least one further wavelength range to which the first resonator mirror (26) is essentially transparent such that laser light is generated in this further wavelength range.

5. Fiber laser according to one of claims 1-4, **characterized in that** a color fitter (34) for controlling the wavelength range of the laser light to be generated is arranged before the second resonator mirror (28).

6. Fiber laser according to one of claims 1-5, **characterized in that** the resonator unit (26,28) comprises at least one further resonator mirror arranged in the beam path behind the second resonator mirror (28).

7. Fiber laser according to claim 6, **characterized in that** the at least one further resonator mirror reflects at least one wavelength range to which the resonator mirror or the resonator mirrors arranged in the beam path before the first resonator mirror are essentially transparent.

8. Fiber laser according to one of claims 1-7, **characterized in that** the resonator unit comprises a shiftable collimating lens (30) for adjusting the wavelength range fed back into the fiber.

9. Fiber laser according to one of claims 1-8, **characterized in that** at the entrance end (14) of the fiber (16) a coupling-in mirror (18) transparent to the wavelength range of the pump light is provided.

10. Fiber laser according to claim 9, **characterized in that** the coupling-in mirror (18) is highly reflecting for the at least one emission wavelength range of the fiber.

11. Fiber laser according to one of claims 1-10, **characterized in that** an optical decoupling means (40) is provided between the pump light source (10) and the entrance end (14) of the fiber (16).

12. Fiber laser according to claim 11, **characterized in that** the optical decoupling unit (40) comprises a polarizing means.

13. Fiber laser according to claim 12, **characterized in that** the polarizing means comprises a polarizing filter (44) arranged behind the pump light source, the polarizing filter (44) being transparent to the pump light emitted by the pump light source (10), and a polarization-changing means (48) arranged behind the polarizing filter (44) such that pump light emerging from the entrance end (14) of the fiber (16) or pump light reflected near the entrance end (14) is polarized such that cannot pass through the polarization filter (44).

14. Fiber laser according to claim 13, **characterized in that** a λ/4 plate is provided as the polarization-changing means (48).

15. Fiber laser according to one of claims 1-14, **characterized in that** the fiber ends (14,20) are enclosed by a material with similar hardness and have been polished together with said material.

16. Fiber laser according to one of claims 1-15, **characterized in that** the mirrors (18,26) are multilayered dielectric mirrors.

17. Fiber laser according to claim 16, **characterized in that** the layers comprise two different and alternately arranged materials.

18. Fiber laser according to one of claims 1-17, **characterized in that** the fiber (16) is doped with 500 - 5,000 ppm, preferably 2,000 - 3,000 ppm, praseodym ions.

19. Fiber laser according to one of claims 1-17, **characterized in that** the fiber (16) is doped with 5,000 - 50,000 ppm, preferably 10,000 - 30,000 ppm, Ytterbium ions.

20. Fiber laser according to one of claims 1-19, **characterized in that** the cutoff wavelength for higher waveguide modes of the fiber (16) is by 5 % - 15 % larger than the shortest laser emission wavelength.

21. Fiber laser according to one of claims 1-20, **characterized in that** from the intensity of the emission power a control signal is generated which controls the emission power of the fiber laser by energizing the pump light source (10).

22. Fiber laser according to claim 21, **characterized in that** the control signal for the pump light contains a portion proportional to the negative of the time deflection of the laser compensating power such that rapid natural oscillations of the laser light are dampened.

23. Fiber laser according to claim 21, **characterized in that** the control signal for the pump light contains portions proportional to the deviation of the laser power from a nominal value and/or to the time integral of said deviation.

24. Fiber laser according to one of claims 1-23, **characterized in that** the gap (d) between fiber end face (14,20) and glued-on mirror (18,26) is filled with a medium having an index of refraction near that of the fiber.

25. Fiber laser according to one of claims 1-24, **characterized in that** the fiber (16) comprises a high numerical aperture, in particular between 0.25 and 0.50.

26. Use of the fiber laser according to one of claims 1-25 as a light source for a confocal microscope, in particular for a fluorescent microscope.

## Revendications

1. Laser à fibre, comportant
une fibre pour créer la lumière laser comportant un côté entrée (14) et un côté sortie (20),
une source de lumière de pompage (10) pour créer une lumière de pompage alimentant la fibre (16) par le côté entrée (14)
un ensemble formant cavité (26, 28) prévu du côté sortie (20) de la fibre,
l'ensemble formant cavité présentant un deuxième miroir de cavité (28) prévu à l'écart du côté sortie (20) pour la réinjection d'au moins un domaine de longueur d'onde dans la fibre de la lumière sortant du côté sortie (20), **caractérisé en ce que** l'ensemble formant cavité présente un premier miroir de cavité (26) relié au côté sortie (20).

2. Laser à fibre selon la revendication 1, **caractérisé en ce que** le premier miroir de cavité (26) est hautement réfléchissant pour le domaine de longueur d'onde de la lumière de pompage, en particulier au-delà de 50%, et réfléchissant, plus particulièrement au-delà de 75%.

3. Laser à fibre selon la revendication 1 ou la revendication 2, **caractérisé en ce que** le premier miroir de cavité (26) est hautement réfléchissant pour le domaine de longueur d'onde de la lumière laser à générer avec la plus petite amplification de lumière, en particulier une réflectance de 50% à 99,9%, de préférence de 80% à 99,1%, de sorte que 0,1% à 50%, de préférence de 0,9% à 20%, du domaine de longueur d'onde de la lumière laser générée sont éjectés.

4. Laser à fibre selon l'une quelconque des revendications 1 à 3, **caractérisé en ce que** le deuxième miroir de cavité (28) est hautement réfléchissant au moins pour un autre domaine de longueur d'onde, pour lequel le premier miroir de cavité (26) est essentiellement transparent, de sorte que la lumière laser est générée dans cet autre domaine de longueur d'onde.

5. Laser à fibre selon l'une quelconque des revendications 1 à 4, **caractérisé en ce qu'**un filtre de couleur (34) est placé en amont du deuxième miroir de cavité (28) pour commander le domaine de longueur d'onde de la lumière laser à générer.

6. Laser à fibre selon l'une quelconque des revendications 1 à 5, **caractérisé en ce que** l'ensemble formant cavités (26, 28) présente au moins un autre miroir de cavité disposé dans la trajectoire du faisceau, derrière le deuxième miroir de cavité (28).

7. Laser à fibre selon la revendication 6, **caractérisé en ce que** ledit moins un autre miroir de cavité réfléchit au moins un domaine de longueur d'onde, pour lequel le ou les miroirs de cavité disposés en amont dans la trajectoire du faisceau sont essentiellement transparents.

8. Laser à fibre selon l'une quelconque des revendications 1 à 7, **caractérisé en ce que** l'ensemble formant cavité présente une lentille de collimation (30) mobile pour le réglage du domaine de longueur d'onde réinjecté dans la fibre.

9. Laser à fibre selon l'une quelconque des revendications 1 à 8, **caractérisé en ce qu'**un miroir d'injection (18) transparent pour la longueur d'onde de la lumière de pompage est prévu sur le côté entrée (14) de la fibre (16).

10. Laser à fibre selon la revendication 9, **caractérisé en ce que** le miroir d'injection (18) pour au moins le domaine de longueur d'onde d'émission est hautement réfléchissant.

11. Laser à fibre selon l'une quelconque des revendications 1 à 10, **caractérisé en ce qu'**un dispositif de découplage (40) optique est prévu entre la source de la lumière de pompage (10) et le côté entrée (14) de la fibre (16).

12. Laser à fibre selon la revendication 11, **caractérisé en ce que** le dispositif de découplage (40) optique présente un dispositif de polarisation.

13. Laser à fibre selon la revendication 12, **caractérisé en ce que** le dispositif de polarisation présente un filtre de polarisation (44) placé en aval de la source de lumière de pompage, ledit filtre étant passant pour la lumière de pompage émise par la source de lumière de pompage (10), ainsi qu'un dispositif de modification de polarisation (48) placé en aval du filtre de polarisation (44), de sorte que la lumière de pompage sortant du côté entrée (14) de la fibre (16) ou la lumière de pompage réfléchie au voisinage du côté entrée (14) est polarisée de telle sorte qu'elle ne peut passer le filtre de polarisation (44).

14. Laser à fibre selon la revendication 13, **caractérisé en ce qu'**une lame. ^{λ}/₄ est prévue comme dispositif de modification de polarisation (48).

15. Laser à fibre selon l'une quelconque des revendications 1 à 14, **caractérisé en ce que** les extrémités de fibre (14, 20) sont entourées d'un matériau de dureté similaire et ont été polies en même temps que ce matériau.

16. Laser à fibre selon l'une quelconque des revendications 1 à 15, **caractérisé en ce que** les miroirs (18, 26) sont des miroirs diélectriques à plusieurs couches.

17. Laser à fibre selon la revendication 16, **caractérisé en ce que** les couches présentent deux matériaux différents disposés en alternance.

18. Laser à fibre selon l'une quelconque des revendications 1 à 17, **caractérisé en ce que** la fibre (16) est dopée avec de 500 à 5000 ppm, de préférence de 2000 à 3000 ppm d'ions praséodyme.

19. Laser à fibre selon l'une quelconque des revendications 1 à 17, **caractérisé en ce que** la fibre (16) est dopée avec de 5000 à 50.000 ppm, de préférence de 10.000 à 30.000 ppm d'ions ytterbium.

20. Laser à fibre selon l'une quelconque des revendications 1 à 19, **caractérisé en ce que** la longueur d'onde de coupure des fibres (16) pour les modes de guides d'ondes supérieurs est de 5% à 15% supérieure à la longueur d'onde d'émission laser la plus courte.

21. Laser à fibre selon l'une quelconque des revendications 1 à 20, **caractérisé en ce qu'**un signal de régulation est généré à partir du niveau de la puissance d'émission, lequel régule la puissance d'émission du laser à fibre en commandant la source de lumière de pompage (10).

22. Laser à fibre selon la revendication 21, **caractérisé en ce que** le signal de régulation pour la lumière de pompage contient une fraction qui est proportionnelle à l'opposé de la dérivée temporelle de la puissance équivalente laser, de sorte que les modes propres rapides de la lumière laser sont atténués.

23. Laser à fibre selon la revendication 21, **caractérisé en ce que** le signal de régulation pour la lumière de pompage contient des fractions qui sont proportionnelles à la différence entre la puissance laser et une valeur prédéterminée et/ou proportionnelles à l'intégrale temporelle de cette différence.

24. Laser à fibre selon l'une quelconque des revendications 1 à 23, **caractérisé en ce que** l'interstice (d) entre les surfaces terminales de la fibre (14, 20) et le miroir collé (18, 26) est remplie par un milieu d'indice de réfraction proche de celui de la fibre.

25. Laser à fibre selon l'une quelconque des revendications 1 à 24, **caractérisé en ce que** la fibre (16) présente une ouverture numérique élevée, en particulier comprise entre 0,25 et 0,50.

26. Utilisation d'un laser à fibre selon l'une quelconque des revendications 1 à 25 comme source de lumière pour un microscope confocal, en particulier un microscope à fluorescence.
